# EUROPEAN PATENT APPLICATION

(11) **EP 0 690 628 A1**
(43) Date of publication of application: **03.01.1996**
(21) Application number: 95107971.4
(22) Date of filing: 26.05.1995
(51) Int. Cl.: H04N 7/18

(54) **Method and apparatus for on-screen control of video surveillance**

(30) Priority: 28.06.1994 US 267804
(71) Applicant: Sensormatic Electronics Corporation, Deerfield Beach, Florida 33442-1795 (US)
(72) Inventor: Paff, Robert, Boca Raton, Florida 33498 (US)
(74) Representative: Hafner, Dieter, Dr.rer.nat., Dipl.-Phys.

(57) **Abstract**

A method and apparatus for controlling a video surveillance system are disclosed. The video surveillance system includes a plurality of video cameras producing a first plurality of video signals. A video switcher selects a plurality of video signals from the first plurality of video signals. A video splitter selects a subset of the plurality of video signals and forms a composite video signal which is fed into an overlay circuit. A computer generates graphical information which is overlaid onto the composite video signal. The composite video signal and the overlaid information are displayed on a monitor. An input device is provided to permit the graphical information to be manipulated on the monitor, thereby controlling the cameras, the video switcher or the video splitter. Control data is communicated from the computer to the cameras, switcher and splitter by means of a data bus.

## Description

### BACKGROUND

### 1. Field of the Invention

The present invention relates generally to the field of video surveillance systems. More specifically, it relates to a device for controlling a video surveillance system. Such a system has a plurality of video surveillance cameras and a video splitter for displaying, on a single video monitor, a plurality of images from some or all of those cameras.

### 2. Discussion of the Prior Art

Video surveillance is widely used to provide enhanced security in premises such as stores, airports, casinos, bus and train stations and factories. Typically, several video cameras are used to monitor such premises. It is often desirable to monitor several video camera outputs from a central location. This can be done by means of known video splitters which allow the output of several video cameras to be displayed on a single video monitor in the form of a split screen display.

A video splitter typically includes several inputs for receiving the outputs of several video cameras. The video splitter forms a composite signal from a subset of the inputs and displays the composite signal on a video monitor. An operator can instruct the video splitter to include some or all of the video camera outputs in the composite signal for display on the video monitor. This is done via switches on the control panel of the video splitter. In order to change the content of the composite signal and hence the display, the operator's attention is necessarily diverted from the video display to a control panel, which is often not conveniently close to the video monitor. Thus, to change the display, the operator has to stop monitoring the display while the video splitter is adjusted. Some video splitters of the prior art can be remotely controlled by a computer via a built-in communications port. In such systems each video camera is assigned a number which must be entered on a keypad in order to change the output of the video splitter. This distracts the operator's attention from the video monitor.

There is therefore a need for a video surveillance system having a video splitter which allows the output of several video cameras to be displayed on a single video screen and which allows an operator to control the video splitter without being distracted from the video screen. There is also a need to allow the operator to control all or most of the operations for video surveillance from the video monitor.

### SUMMARY OF THE INVENTION

The invention is a system for monitoring several of locations using video cameras at the locations. A video splitter receives a plurality of video signals, selects a subset of video signals from the plurality of video signals and forms a composite signal from the subset of video signals. A video switcher may be provided to select the plurality of signals from a first plurality of signals from the cameras. A computer generates graphical information for display on a video monitor. A processor processes the graphical information so that the graphical information and the composite signal can be displayed on the monitor substantially simultaneously. The graphical information comprises control information which can be manipulated on the monitor by an input device thereby generating control signals for controlling the cameras, the video splitter or the switcher.

The invention also includes a method of monitoring a plurality of locations. Each of the locations is monitored by a video camera. The method comprises the steps of receiving a plurality of video signals. The plurality of signals may be selected from a first plurality of signals from the cameras by means of a video switcher. A subset of video signals is selected from the plurality of signals and a composite signal is formed from the subset of video signals by means of a video splitter. A computer generates graphical information. The composite signal and the graphical information are displayed on the monitor simultaneously. The video splitter, the cameras or the video switcher are controlled by manipulating at least some of the graphical information on the monitor by means of a computer input device.

### BRIEF DESCRIPTION OF THE DRAWINGS

Fig. 1 as a block diagram of the video surveillance system of the present invention.
Fig. 2 is a graphical representation of information which appears on the video monitor of the invention;
Fig. 3 is a graphical representation of information which appears on the video monitor of the invention showing in detail the control palette of the invention;
Fig. 4 is a detailed drawing of the control palette of the invention.

### DETAILED DESCRIPTION

The following is a detailed description of the preferred embodiment of the invention. The description is intended to illustrate the invention rather than limit it. The full scope of the invention is to be determined by the appended claims.

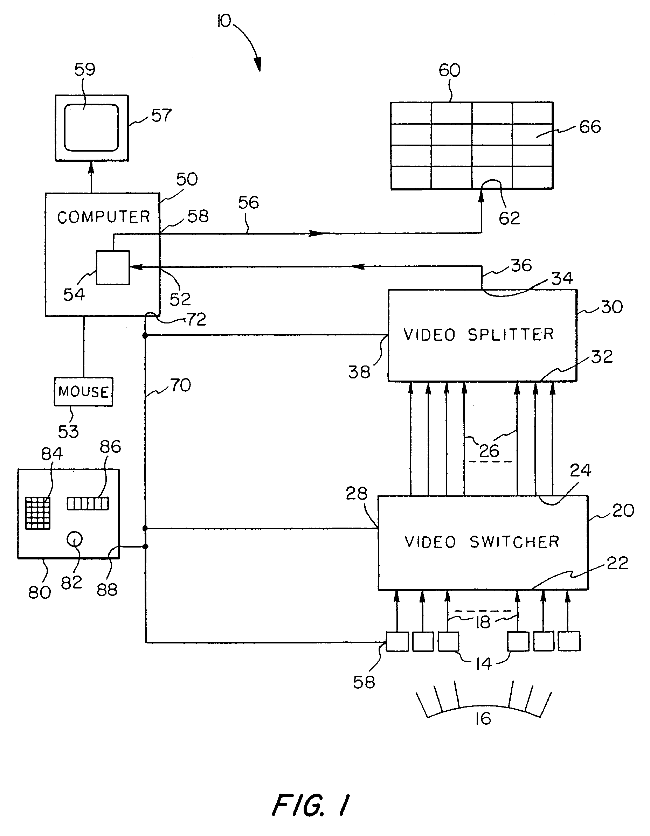

Integrated surveillance system 10 is depicted in block diagram form in Fig. 1. The following is a list of the main components of system 10:
- Video cameras 14
- Video switcher 20
- Video splitter 30
- Computer 50 - with mouse or trackball 53
- Computer monitor 57
- Data Bus 70
- Overlay circuit 54
- Video Monitor 60
- Camera controller 80
A plurality of video cameras 14 is provided for surveillance at a plurality of locations 16. Each of the video cameras preferably has the ability to tilt, pan and zoom. Each of the cameras also has an iris which can be adjusted depending on photographing conditions. Video cameras 14 are provided with communications ports 58 which enable the cameras to be remotely controlled by computer 50 via data bus 70. In a typical application, video cameras 14 are distributed around various locations 16 in a factory, airport, casino, train or bus station or store. The invention contemplates as many as several hundred cameras, each monitoring a particular area. Cameras 14 produce a first plurality of video output signals 18 representative of the images the cameras are filming at any given time.

Camera output signals 18 are fed into video switcher 20 which is provided with a plurality of video input ports 22 for receiving camera output signals 18. Switcher 20 also has a plurality of output ports 24. Video switcher 20 is a large matrix video switcher which is capable of selecting, from the first plurality of video output signals 18 presented to video input ports 22, a second plurality of output video signals 26. Output video signals 26 are output at video output ports 24. For example, there may be 100 video cameras producing 100 video signals 18. Switcher 20 allows the user to select, for example, sixteen of those video signals depending on the capabilities and requirements of system 10. Video switcher 20 is provided with an RS232 communications port 28 which allows computer 50 to control the operation of video switcher 20 via data bus 70 and, in particular, to select the second plurality of video signals as described above. While an RS232 port is preferred, other protocols can also be used. A suitable video switcher is the AD2050 MegaPower II Matrix Switcher/Control System, a microprocessor based switcher allowing 1024 camera inputs (expandable to 4096) available from American Dynamics of Orangeburg, New York.

In the preferred embodiment, video switcher 20 has sixteen video output ports 24 which are in turn in communication with sixteen video input ports 32 of video splitter 30. Video signals 26 (output by switcher 20) are thus applied to video input ports 32 of video splitter 30. Video splitter 30 has a single video output port 34, Video splitter 30 receives video signals 26 and combines a user-selected subset of them into a single composite video signal 36 which appears at output port 34 as a standard video signal. The user can instruct video splitter 30 to select a subset of anywhere from one to sixteen of video signals 26 for inclusion in composite video signal 36. Video splitter 30 is also provided with an RS232 communications port 38 for receiving control data from computer 50 via data bus 70. A suitable video splitter is the MV96 Multivision Plus™ Color Record/Display Multiplexer available from Robot Research, Inc. of San Diego, California.

Composite signal 36 is fed into communications port 52 of computer 50. Computer 50 is preferably an Apple Macintosh II personal computer. Communications port 52 is connected to overlay circuit 54. Overlay circuit 54 is a processor which superimposes certain graphical information over composite signal 36 to form a composite analog video display signal 56 at output port 58 for display on video monitor 60. The graphical information is described below. Overlay circuit 54 is a ColorSpace II video graphics card added to the Apple Macintosh II computer. In the system just described, overlay circuit 54 receives an analog video signal 36. An alternative approach is to digitize signal 36, overlay the graphics and display the resultant signal 59 on computer monitor 57.

Video display signal 56 is fed into input port 62 of video monitor 60. Signal 56 carries video information which contains one, four, nine or sixteen video pictures 66 (video splitter 30 has 16 input ports) with overlayed computer graphics provided by computer 50 via overlay circuit 54, depending on instructions received from computer 50 at communications port 38 of video splitter 30.

Computer 50 controls the overall operation of system 10. Computer 50 is provided with an input device 53 which allows the operator to communicate instructions to computer 50. Input device 53 is a mouse or trackball. For simplicity, input device 53 will be referred to as "mouse 53" in this specification with the understanding that the term "mouse" includes any equivalent computer pointing device. Computer 50 has communications port 72 (preferably RS232) which provides access to data bus 70. Data bus 70 provides a data communications channel which carries control information to and from computer 50. Data bus 70 is connected to video splitter 30 at communications port 38, to video switcher 20 at communications port 28 and to cameras 14 at a plurality of ports 58.

Also provided as part of system 10 is a camera controller 80. Camera controller 80 is designed to control some or all of cameras 14. Camera controller 80 is a self-contained external device comprising a joystick 82, a numeric keypad 84 and function control buttons 86. Controller 80 is also provided with communications port 88 which enables controller 80 to receive control data from computer 50 and output control data to cameras 14 via data bus 70. Using controller 80, the operator can select a camera by keying in a number assigned to that camera on keypad 84. The pan and tilt of the camera can be adjusted by manipulating joystick 82. Other functions of the camera (such as zoom, focus and iris opening) can be controlled using function control buttons 86. Computer 50 is programmed to allow an operator to control cameras 14 via controller 80 or by manipulating mouse 53 to control icons on video monitor 60 or computer monitor 57 (in a manner described below).

The above described system enables an operator to use computer 50 to select up to sixteen video inputs (a plurality of signals) from hundreds of video signals from video cameras (a first plurality of signals) using switcher 20. A further subset of the selected video inputs can also be selected and combined into a composite signal 36 using splitter 30. The composite signal 36 is fed into overlay circuit 54 of computer 50 where it is combined with overlay data. The composite video signal with overlay information 58 is then output to video monitor 60 for display.

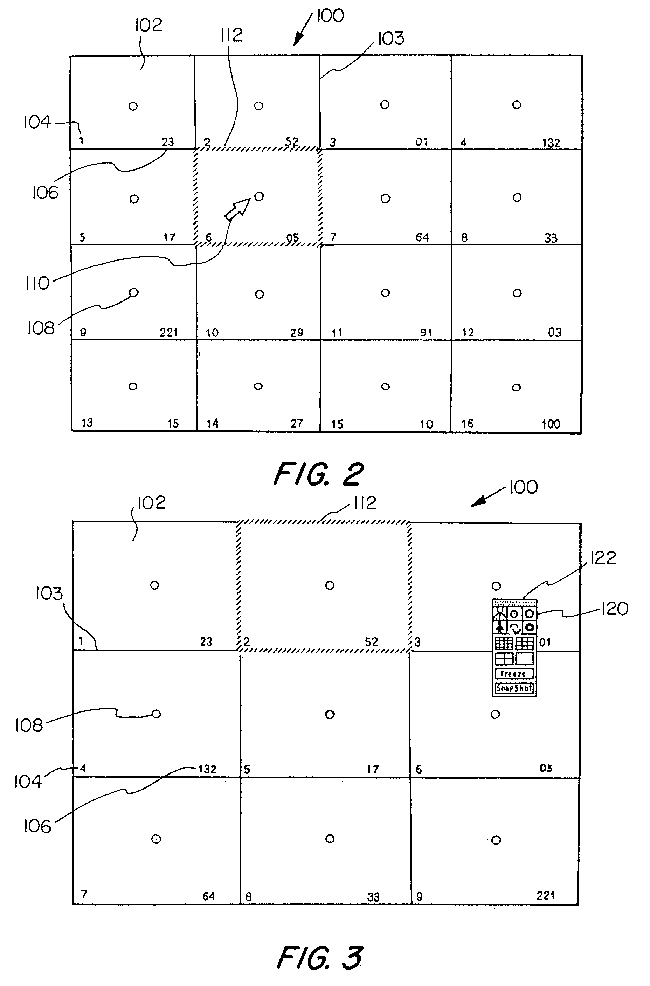

The display and overlay data which appear on monitor 60 will now be described in detail. Signal 56 appears on video monitor 60 as part of display 100 (Refer to Fig. 2). Depending on the output of video splitter 30, display 100 will contain "n" rectangles 102, where n is preferably 1, 4, 9 or 16. Display 100 can therefore be broken down into a matrix comprising 1, 4, 9 or 16 equally sized rectangles. Each rectangle contains a video picture corresponding to the image filmed by one of cameras 14 which has been selected by switcher 20 and splitter 30 under the control of computer 50.

Overlay circuit 54 superimposes certain graphical information on composite signal 36 to form signal 56 which is displayed on video monitor 60. The combined composite signal 36 and graphical information are thus displayed simultaneously on video monitor 60. Depending on the number of rectangles 102, overlay circuit may superimpose grid lines 103, forming n rectangles coinciding with rectangles 102. An identification number 104 is assigned to and displayed in each rectangle in order to identify it. Overlay circuit 54 places number 104 in the bottom left hand corner of each rectangle 102. Additionally, each one of cameras 14 is assigned an identification number 106. Overlay circuit is instructed by computer 50 to place an identification number 106 in the bottom right hand corner of each rectangle 102 depending on which cameras have been selected for display. For example, as shown in Fig. 2, the output of camera number 23 is displayed in rectangle number 1, the output of camera 5 is displayed in rectangle number 6, the output of camera 91 is displayed in rectangle number 11 etc.

Computer 50 generates a cursor 110 which is overlaid onto signal 36 and thus appears on display 100. Cursor 110 can be moved around first display 100 by moving mouse 53. Cursor 110 can also be displayed on computer monitor 57 and moved between computer monitor 57 and video monitor 60 by moving mouse 53 appropriately. A control icon 108 is generated by computer 50 and overlaid onto signal 36. Control icon 108 is displayed in the center of each rectangle 102. Control icon 108 is used in conjunction with cursor 110 to control cameras 14.

Computer 50 is programmed so that grid lines 103, numbers 104 and 106 and control icon 108 are automatically positioned appropriately, irrespective of the number of rectangles in display 100 when the operator selects a subset of video signals in composite signal 36.

In order to control a particular camera, the operator uses mouse 53 to place cursor 110 in the rectangle 102 in display 100 in which the output of the camera is displayed and clicks the mouse on that rectangle. This step initiates the control of the camera whose output is displayed in the current rectangle. For example, to control camera 5 (displayed in rectangle 6), the user clicks mouse 53 on rectangle 6. This step is analogous to clicking on a window in a display of a Macintosh computer, thus activating that window. When the operator clicks mouse 53 with the cursor in a particular rectangle, overlay circuit 54 is instructed to generate a highlight box 112 which appears around that rectangle, indicating that the computer is now in control of the camera whose output is displayed in the highlighted rectangle. Any rectangle can be moved to another position on display 100 by clicking on it, holding the mouse button down, moving the rectangle to the desired location and releasing it. This manipulation is directly analogous to moving a "window" from one part of a computer display to another using the "drag and drop" facility of the Macintosh computer. The image displayed in any particular rectangle can be expanded to cover the whole of display 100 by placing cursor 110 in the rectangle and double clicking the mouse. To achieve this, computer 50 sends suitable instructions to overlay circuit 54 and splitter 30. This is analogous to the "window maximize" facility of the Macintosh computer.

The camera whose output appears in the highlighted rectangle can be controlled either by means of mouse 53 or camera control 80. In order to control a camera using mouse 53, the user clicks the mouse on control icon 108 in the rectangle in which the camera output appears. For example, referring to Fig. 2, to control camera 5, the user clicks the mouse on the control icon 108 in rectangle 6. Moving cursor 110 to the right or the left away from icon 108 causes the camera to pan right or left. The further cursor 110 is moved from control icon 108, the faster the camera will pan. Moving cursor 110 up or down away from control icon 108 causes the camera to tilt up or down. Moving the cursor diagonally likewise moves the camera diagonally. When this is done, computer 50 automatically instructs the relevant camera by sending a command along data bus 70 to the camera. Thus, the operator can control cameras 16 by interacting with control icon 108 using mouse 53.

Computer 50 may also generate a further control icon in the form of a control palette 120 which can be called up by the operator from a menu. The overlay circuit 54 superimposes control palette 120 over the video pictures displayed on video monitor 60. Palette 120 is thus displayed simultaneously with composite signal 36. See Fig. 3. Control palette 120 allows the operations of the cameras and the video splitter to be controlled by an operator's interaction with control palette 120 on video monitor 60. Control palette 120 appears in display 100 as a window comprising a drag bar 122 and various icons which allow the splitter and the cameras to be controlled. Drag bar 122 allows the operator to drag and drop the control palette by clicking and holding mouse 53 on the drag bar and dragging palette 120 to a desired location on display 100.

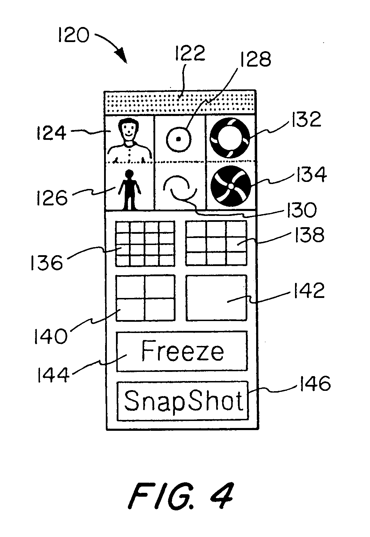

The following icons are provided on control palette 120 for controlling the camera (refer to Fig. 4): Zoom controls 124 and 126 allow the operator to cause the camera to zoom in (by clicking on control 124) and out (by clicking on control 126); focus controls 128 and 130 allow the focus of the camera to be corrected; iris controls 132 and 134 allow the iris of the camera to be opened (by clicking on iris control 132) and closed (by clicking on iris control 134). When the operator clicks the mouse on any of the aforementioned icons, computer 50 automatically generates a control signal which it sends to the appropriate camera along bus 70.

The following icons are provided on the palette for controlling the video splitter: sixteen split icon 136 allows the operator to break the display on video monitor into sixteen rectangles; nine split icon 138 allows the operator to break the display on video monitor into nine rectangles; four split icon 140 allows the operator to break the display on video monitor into four rectangles and full screen icon 142 allows the operator to cause the display of only one camera to fill the entire display 100. Thus, depending on which split icon the operator clicks on, a different subset of video signals 26 can be included in composite signal 36. When the operator clicks the mouse on any of the split icons just described, computer 50 sends a command along bus 70 to video splitter 30. The command causes video splitter to form composite signal 36 from the appropriate number of input signals 26. Substantially simultaneously, overlay circuit 56 is instructed to arrange control icons 108 so that they are correctly positioned with respect to each rectangle. Overlay circuit 54 also places grid lines 103 so that a grid having as many rectangles as there are pictures in video signal 36 is formed on display 100. Highlight box 112 is placed on the rectangle displaying the output of the particular camera under the control of computer 50 and the identification numbers 104 and 106 are placed in rectangles 102 as described above.

Freeze icon 144 allows the operator to freeze on monitor 60 the image in a selected rectangle. For example, (see Fig. 2) if the operator wishes to freeze the image from camera 91, the operator clicks cursor 110 on rectangle 11. Highlight box 112 appears around rectangle 11. The operator then clicks cursor 110 on freeze icon 144 of palette 120. The image in rectangle 11 will be frozen until the operator clicks on the freeze icon again.

Snapshot icon 146 allows the operator to freeze the image in the selected rectangle and store it in the memory of computer 50. For example, if the output of camera 100 is to be frozen and stored, the operator clicks on rectangle 16 and then on snapshot icon 146.

The above operations are accomplished by suitable programming of computer 50. The precise details of the code programmed into computer 50 are not considered to be crucial to the description of the invention. A person skilled in the art will be in a position to write suitable code for computer 50 based on the above description.

Computer 50 may also be connected to computer monitor 57 which displays a range of information, including information relating to the status of cameras 14, switcher 20 and splitter 30. Computer 50 generates a graphic display 59 comprising a map of the locations 16 and icons representing cameras 14 at those locations. The icons are located on the graphic display 59 in the same relative positions on the map as the cameras they represent. By clicking mouse 53 on the icons, the operator can cause computer 50 to instruct switcher 20 to select any of cameras 14. The operations of cameras 14, switcher 20 and splitter 30 can all be controlled by manipulating mouse 53 to interact with and control the icons on display 59. A system including a computer and computer monitor of this type is described in copending U.S. Patent Application No. 08/166,599, which is incorporated herein by reference.

The system described above allows an operator to monitor on a screen the outputs of several cameras at different locations and control the generation of video signals directly from the video screen. This means that the operator can continue to monitor the camera outputs while selecting different cameras and/or controlling the operation of the cameras.

## Claims

1. In an integrated security system for surveillance of a plurality of locations, a method of controlling a number of live video images from a plurality of video cameras for display on a video monitor comprising:
(a) transmitting signals representing said live video images to a video splitter;
(b) selecting one or more of said signals representing said live video images transmitted to said video splitter for producing a single video output signal from said video splitter;
(c) superimposing graphic data on said single video output signal;
(d) displaying said video output signal and said superimposed graphic data on said video monitor;
(e) controlling the selection of the live video images by interacting with the graphic data on said video monitor through a computer.

2. A method of monitoring several locations, the method comprising the steps of:
receiving a plurality of video signals;
selecting from the plurality of video signals a subset of video signals and forming a composite signal from the subset of video signals by means of a video splitter;
generating graphical information by means of a computer;
displaying the composite signal and the graphical information on a monitor simultaneously;
interacting with the graphical information on the monitor by means of a computer input device, thereby controlling the video splitter.

3. The method of claim 2 further comprising the step of superimposing the graphical information onto the composite signal.

4. The method of claim 2 further comprising the step of selecting the plurality of video signals from a first plurality of video signals.

5. The method of claim 2 wherein the video signals are produced by video cameras at the locations, the method further comprising the step of controlling at least one of the cameras by interacting with the graphical information on the monitor.

6. The method of claim 4 wherein the step of selecting the plurality of signals is performed by a video switcher and further comprising the step of controlling the video switcher by means of the computer.

7. An integrated security system for surveillance of a plurality of locations comprising:
(a) a plurality of video cameras positioned at the locations under surveillance for generating output signals representing live images of areas under surveillance;
(b) a video splitter comprising a plurality of inputs connected to said outputs of said video cameras, means to select one or more of said inputs and means to produce a single output signal therefrom;
(c) a video monitor;
(d) a computer means having an input connected to said single output signal from said video splitter and an output connected to a video monitor, said computer means being programmed to generate first graphic displays for display on said video monitor;
(e) a computer monitor connected to said computer means for displaying thereon second graphic displays generated by said computer including icons representing said video cameras, each icon being located on said second graphic displays in the same relative location as the video camera represented thereby;
(f) an operator controlled input means connected to said computer means for controlling the operation of said computer means, said operator controlled input means cooperating with said computer means to control said video splitter and to control the number of inputs of said' video splitter for display as the composite output signal of said video splitter on said video monitor, said control of said video splitter being exercised by interacting with the graphic display on one of said monitors.

8. A video monitoring system comprising:
means for generating a composite video signal, the means for generating comprising:
means for providing a plurality of video signals;
a video splitter for forming the composite video signal from a subset of the plurality of video signals and outputting the composite video signal;
a video monitor for displaying the composite video signal;
a computer adapted to generate graphical information;
means for displaying the graphical information on the video monitor simultaneously with the composite video signal;
an input device connected to the computer for enabling an operator to interact with at least some of the graphical information on the video monitor, thereby controlling the means for generating the composite video signal.

9. The system of claim 8 wherein the means for providing the plurality of video signals comprises a video switcher for selecting the plurality of video signals from a first plurality of video signals.

10. The system of claim 8 wherein the means for providing the plurality of video signals comprises a plurality of video cameras.

11. The system of claim 8 further comprising a data bus linking the computer to the means for providing the plurality of video signals, thereby permitting the computer to control the means for providing the plurality of video signals.

12. The system of claim 10 further comprising a data bus linking the computer to the plurality of video cameras, thereby permitting the computer to control the plurality of video cameras.

13. The system of claim 9 further comprising a data bus linking the computer to the video switcher, thereby permitting the computer to control the video switcher.

14. The system of claim 8 wherein the input device communicates information to the computer thereby controlling the means for providing the plurality of video signals.

15. The system of claim 8 wherein the graphical information includes at least one control icon.

16. The system of claim 8 wherein the graphical information comprises a control palette such that manipulation of the control palette controls the means for providing the plurality of video signals.

17. The system of claim 16 wherein the control palette comprises icons such that manipulation of the icons controls the video splitter.

18. The system of claim 10 wherein the graphical information comprises a control palette, comprising icons such that interaction with of the icons by means of the input device controls at least one of the plurality of video cameras.
